(19) Europäisches Patentamt
European Patent Office
Office européen des brevets

(11) EP 2 192 469 B1

(12) **EUROPEAN PATENT SPECIFICATION**

(45) Date of publication and mention
of the grant of the patent:
**03.01.2018 Bulletin 2018/01**

(51) Int Cl.:
***G06F 3/0362*** *(2013.01)*

(21) Application number: **09176659.2**

(22) Date of filing: **20.11.2009**

(54) **Operation feel feedback input device**

Eingabevorrichtung mit Bediengefühlrückmeldung

Dispositif de saisie avec retour de sensation tactile

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **27.11.2008 JP 2008302406**

(43) Date of publication of application:
**02.06.2010 Bulletin 2010/22**

(73) Proprietor: **ALPS ELECTRIC CO., LTD.**
**Tokyo 145-8501 (JP)**

(72) Inventors:
• **Miyako, Ikuyasu**
**Tokyo 145-8501 (JP)**
• **Hayasaka, Satoshi**
**Tokyo 145-8501 (JP)**

• **Furuki, Shigeru**
**Tokyo 145-8501 (JP)**

(74) Representative: **Schmitt-Nilson Schraud Waibel
Wohlfrom
Patentanwälte Partnerschaft mbB
Destouchesstraße 68
80796 München (DE)**

(56) References cited:
**EP-A2- 1 349 050        WO-A2-99/49443
DE-A1-102006 018 522    US-A- 5 381 080
US-A1- 2006 012 584     US-A1- 2006 054 427
US-A1- 2006 071 917     US-B1- 6 356 045
US-B1- 6 404 354        US-B1- 6 636 197
US-B1- 6 686 911        US-B1- 6 876 891**

EP 2 192 469 B1

## Description

### BACKGROUND OF THE INVENTION

#### 1. Field of the Invention

The present invention relates to an operation feel feedback input device according to the preamble of claim 1. Such device is able to be used as an input device for any of various electronic apparatuses and vehicle-mounted electrical components and can provide a mechanical operation feel to an operator upon operating the device.

#### 2. Description of the Related Art

As for conventional input devices providing an operation feel using a frictional force, there is known a related-art technique of setting a force curve in which the increase and decrease in frictional force are repeated during a change in the angle of rotation of a rotary operation unit and providing a click feel each time the frictional force exceeds a peak (peak point) of the force curve during rotation. This technique is disclosed in, for example, Japanese Unexamined Patent Application Publication No. 2003-295959, which discloses a device of the preamble of claim 1.

In the use of such a friction-based operation feel feedback input device, it is preferable to use a method of setting a position (valley of the force curve) where the frictional force is minimized as a reference position of the rotary operation unit and stopping the rotary operation unit at the reference position after providing a click feel. In other words, the utilization of this method may achieve the following advantages. The rotary operation unit can be allowed to provide a crisp feel in each stop position without using a mechanical system. For example, in the case where the angle of rotation of the rotary operation unit is operatively associated with a pointer displayed on a screen, the pointer can be aligned with each mark or scale, displayed on the screen, corresponding to the reference position.

### SUMMARY OF THE INVENTION

The friction-based operation feel feedback input device generates a frictional force only when the rotary operation unit is rotated. The input device has no function of allowing the rotary operation unit to move independently. Accordingly, if the operator moves his or her hand off the rotary operation unit after the unit passes the reference position, the rotary operation unit cannot be returned to the reference position.

As a matter of course, even if the rotary operation unit is not returned to the reference position, the operator does not particularly find it inconvenient. In the case where the angle of rotation of the rotary operation unit is operatively associated with the pointer displayed on the screen as described above, however, the displayed pointer is misaligned with a mark or scale. Disadvantageously, this results in a reduction in appearance. In addition, if an electromagnetic brake is used to provide a frictional resistance, the electromagnetic brake is energized after the operator moves his or her hand off the rotary operation unit. Unfortunately, electric power is wasted.

US 2006/0054427 A1 and US 2006/0071917 A1 disclose an operation seal feedback input device having two elements with brake surfaces when the two elements are rotated to a first relative position, an electromagnetic coil exerts a great force to one of the elements so that further rotational movement is prevented. Specifically, if the rotational movement of one of the two elements reaches an end position, the electromagnetic coil prevents further movement and provides a haptic feedback to the operator.

There exists haptic feedback devices which have a "snap back" feature would brings a rotary operation unit back into a reference position when an operator releases the operation unit and the operation unit is on either one of the right and left sides of a reference position. E.g. DE 10 2006 018 522 A1 discloses an operation unit which has a detent mechanism including a toothing provided on a movable part and a bore member which is biased into the toothing by means of a spring member. That is to say, the haptic feedback mechanism is embodied by mechanical means.

According to an aspect of the invention, an operation feel feedback input device includes the features of claim 1.

The above-described rotary operation unit is freely rotated by an operator. The rotating member rotates together with the rotary operation unit. When the frictional resistance applying means applies a frictional resistance to the rotating member, a resistance force caused by the frictional resistance appears as an operation feel provided to the operator. At that time, the control means controls how to apply the frictional resistance on the basis of the angle of rotation detected by the detecting means.

While a coordinate corresponding to the angle of rotation of the rotary operation unit is on either one of the right and left sides of a previously defined reference position on a predetermined coordinate axis, when the control means determines that an operation force for shifting the coordinate toward the one side from the reference position is applied to the rotary operation unit, the control means controls the application by the frictional resistance applying means in order to increase the frictional resistance in accordance with a change in the angle of rotation detected by the detecting means. When determining that the operation force for shifting the coordinate toward the one side from the reference position is not applied to the rotary operation unit during the control, the control means replaces the coordinate corresponding to the angle of rotation of the rotary operation unit with a coordinate of the reference position in the control of the application.

For example, assuming that a coordinate corresponding to the current angle of rotation is located to the right of the reference position on the coordinate axis, when an operation for shifting the coordinate rightward, the control means performs the above-described control, thus increasing a frictional force in accordance with a change in the angle of rotation. In this case, such an operation feel that the resistance gradually increases can be provided to the operator. When the operator stops the operation in this state, the control means replaces the coordinate corresponding to the angle of rotation with the coordinate of the reference position in the control of the application. Thus, if the rotary operation unit cannot move independently, it is determined in the control that the coordinate is returned to the reference position when the operator moves his or her hand off the operation unit or interrupts the operation. The application of the frictional resistance can be stopped.

The frictional resistance applying means includes an electromagnetic brake that generates an electromagnetic force in response to power supply and applies a frictional resistance to the rotating member using the electromagnetic force. In this case, the control means is capable of adjusting the magnitude of current or voltage for the power supply to the electromagnetic brake to control the magnitude of the frictional resistance to be applied by the frictional resistance applying means. In addition, when the coordinate corresponding to the angle of rotation of the rotary operation unit is located in the reference position on the coordinate axis, the control means stops the power supply to the electromagnetic brake.

With this configuration, the control means stops the power supply to the electromagnetic brake not only when the coordinate corresponding to the angle of rotation of the rotary operation unit is located in the reference position from the beginning but also when the coordinate corresponding to the angle of rotation is replaced with those of the reference position in the control, thus preventing power from being wasted.

In this aspect, the operation feel feedback input device may further include an elastic member interposed between the rotary operation unit and the rotating member, the elastic member being elastically deformed by an operation force, applied to the rotary operation unit while a frictional resistance is applied to the rotating member, to allow the rotary operation unit to rotate. The direction of elastic deformation substantially coincides with the direction in which the operation force is applied to the rotary operation unit.

When the coordinate corresponding to the angle of rotation of the rotary operation unit is shifted in the direction from the one side to the other side on the coordinate axis by a predetermined amount upon return of the elastic member from its elastically deformed state, the control means can determine that the operation force for shifting the coordinate toward the one side from the reference position is not applied to the rotary operation unit.

The interposition of the elastic member between the rotary operation unit and the rotating member ordinarily allows an operation force applied to the rotary operation unit to be transmitted to the rotating member and also allows a frictional resistance applied to the rotating member to be transmitted to the rotary operation unit. In addition, when an operation force is applied to the rotary operation unit while a frictional resistance is applied to the rotating member, the operation force can be transmitted to the rotating member while the elastic member is elastically deformed.

In this situation, when the operator moves off his or her hand off the rotary operation unit or eliminates the operation force, the elastic member returns from its deformed state, so that the rotary operation unit rotates in the direction opposite to that in the operation performed so far. So long as a change in the angle of rotation at that time is a predetermined amount (or more), the control means determines that the operation force is not applied to the rotary operation unit and then replaces the coordinate to those of the reference position. Thus, the further application of the frictional resistance can be stopped.

According to this aspect, the control means may determine the magnitude of a frictional resistance to be applied by the frictional resistance applying means on the basis of a force curve in which the frictional resistance is minimized in each of reference positions defined on the coordinate axis and the frictional resistance is maximized in coordinate between the two adjacent reference positions. In this case, preferably, the control means performs the following control.

When determining that the coordinate corresponding to the angle of rotation of the rotary operation unit is shifted from either one of the right and left sides of one of the reference positions to the other side so as to pass the reference position in response to an operation force applied to the rotary operation unit and also determining that the operation force for shifting the coordinate toward the other side from the reference position is applied to the rotary operation unit, the control means may control the application by the frictional resistance applying means in order to increase the frictional resistance in accordance with a change in the angle of rotation detected by the detecting means. When determining that the operation force for shifting the coordinate toward the other side is not applied to the rotary operation unit during the control, the control means replaces the coordinate corresponding to the angle of rotation of the rotary operation unit with the coordinate of the reference position (which the coordinate have passed earlier) in the control of the application.

In the above-described situation, while the rotary operation unit is continuously rotated in one direction such that the coordinate of the rotary operation unit passes a plurality of reference positions, the frictional resistance is maximized at the midpoint between the two adjacent reference positions. After the coordinate passes the midpoint, the frictional resistance is gradually reduced as the coordinate approaches the next reference position. Thus, a click feel can be generated in accordance with such a change in frictional resistance.

Even when the operator tries to stop operating the rotary operation unit in response to the generation of the clock feel, the rotary operation unit rotates under its own inertia to a slightly excessive extent because the frictional resistance is minimized in the next reference position. In some cases, the coordinate is shifted to a position beyond the next reference position. In this case, although the rotary operation unit cannot return to the reference position independently, it is preferred in the control to return the coordinate to the reference position.

According to the aspect of the present invention, when the control means determines that the coordinate is shifted from the one side of the reference position to the other side on the coordinate axis so as to pass the reference position and the operation force is not applied at the time when the coordinate passes the reference position, the control means replace the coordinate with those of the reference position in the control. This prevents the frictional resistance from being applied after the operation force is not applied.

In this aspect, in the case where the elastic member is interposed between the rotary operation unit and the rotating member as described above, when the coordinate corresponding to the angle of rotation of the rotary operation unit are shifted in the direction from the other side to the one side on the coordinate axis by a predetermined amount in response to the return of the elastic member from its elastically deformed state, the control means can determine that the operation force for shifting the coordinate toward the other side from the reference position is not applied to the rotary operation unit.

According to this aspect, the control means may further include a signal output section that outputs coordinate corresponding to the angle of rotation detected by the detecting means as an external output signal to indicate a position corresponding to the angle of rotation of the rotary operation unit on a predetermined display screen. When replacing the coordinate corresponding to the angle of rotation with the coordinate of the reference position in the control of the application, the control means allows the signal output section to output the replaced coordinate as the external output signal.

For example, in the case where the angle of rotation of the rotary operation unit is operatively associated with a pointer displayed on the screen as described above, the coordinate is output as the external output signal from the control means to a display device. Thus, the display device can allow a display on the screen to reflect the received coordinate. Usually, when the rotary operation unit is operated, the position of the pointer on the screen also changes in association with a change in the coordinate at that time. In the case where the operator stops operating the rotary operation unit while the coordinate is located on either side of the reference position as described above, the coordinate is replaced with those of the reference position in the control. When the replaced coordinate is output as an external output signal, therefore, the position of the pointer can be displayed so as to be aligned with a marker or a scale on the screen of the display device. Thus, the appearance of displays can be further enhanced.

The operation feel feedback input device according to the aspect of the present invention can solve disadvantages caused by the absence of a function of allowing the rotary operation unit to move independently.

BRIEF DESCRIPTION OF THE DRAWINGS

FIG. 1 is a schematic diagram illustrating the entire structure of an operation feel feedback input device according to an embodiment of the present invention;

FIG. 2 is a plan view (including the cross section taken along the line II-II in FIG. 1) of a rotating member coupled to a friction plate;

FIG. 3 is a block diagram schematically showing the configuration of a control system of the operation feel feedback input device;

FIGS. 4A and 4B are diagrams illustrating examples of display performed in association with a change in the angle of rotation (coordinate) of a rotary operation unit;

FIG. 5 is a flowchart illustrating exemplary steps of a control process performed by a control unit (arithmetic section);

FIGS. 6A and 6B are diagrams illustrating an exemplary force curve used for frictional force calculation in contract with the display examples;

FIG. 7 is a flowchart concretely illustrating exemplary steps of frictional force calculation processing performed in the control process; and

FIGS. 8A and 8B are diagrams illustrating another exemplary force curve available in the frictional force calculation processing in contrast with other display examples.

DESCRIPTION OF THE PREFERRED EMBODIMENTS

Embodiments of the present invention will be described below with reference to the drawings. An operation feel feedback input device according to an embodiment of the present invention can be used as an input device (user interface) for any of various electronic apparatuses (computers, audio instruments, and video instruments) and vehicle-mounted electrical components, such as a car navigation system.

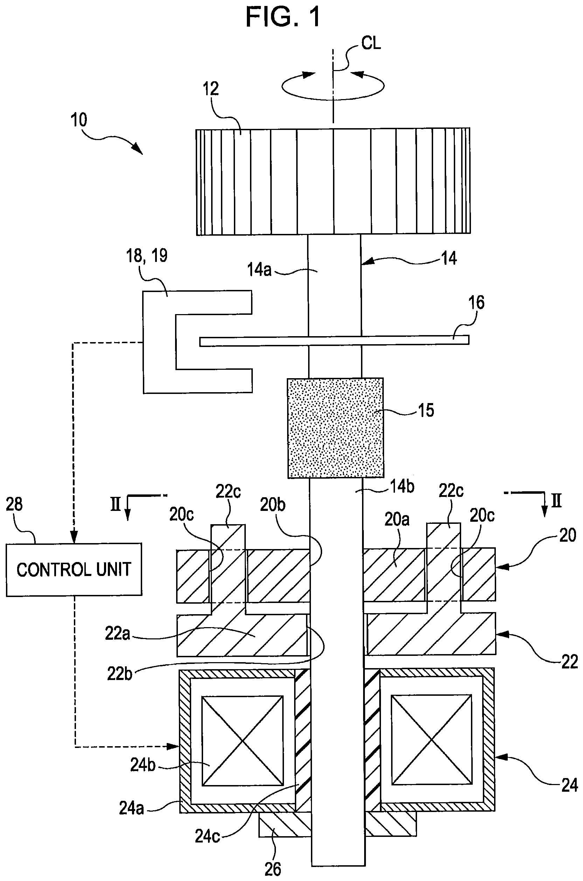

FIG. 1 is a schematic diagram illustrating the entire structure of an operation feel feedback input device 10 according to an embodiment of the present invention. Referring to FIG. 1, most of mechanical components of the operation feel feedback input device 10 are illustrated in longitudinal cross section. An electrical component of the operation feel feedback input device 10 is illustrated as a block in FIG. 1.

Rotary Operation Unit

The operation feel feedback input device 10 includes a rotary operation unit 12. The rotary operation unit 12 has, for example, a rotating knob shape (dial shape). An operator can rotate the rotary operation unit 12 while holding the unit 12. At that time, the rotary operation unit 12 is rotated around a center axis CL indicated by an alternate long and short dash line in FIG. 1.

The rotary operation unit 12 is coupled to, for example, one end of a rotating shaft 14. The rotating shaft 14 extends from the rotary operation unit 12 along the above-described center axis CL in one direction (downward in FIG. 1). The rotating shaft 14 rotates around the center axis CL together with the rotary operation unit 12.

Elastic Member

The rotating shaft 14 is provided with an elastic member 15 such that the elastic member 15 is positioned in substantially the middle of the rotating shaft 14 in the axial direction. Accordingly, the rotating shaft 14 includes a first part 14a and a second part 14b arranged in the axial direction, with the elastic member 15 therebetween. The elastic member 15, the first part 14a, and the second part 14b are securely joined to each other such that each joint face is fixed to the corresponding joint face. For example, rubber can be used as a material for the elastic member 15.

Detection of Rotation State

The rotating shaft 14 (first part 14a) is provided with a code plate 16, serving as an object to be detected, attached on the outer surface of the rotating shaft 14. The code plate 16 has a thin disc shape whose center coincides with the rotating shaft 14 and further has slits (not shown) arranged at predetermined pitch along the circumference thereof. In addition, the code plate 16 has indices (not shown), serving as light-shielding portions, arranged from a rotation home position as a reference point in the periphery thereof.

As for detectors, for example, two photo-interrupters 18 and 19 are disposed near the rotating shaft 14. The photo-interrupters 18 and 19 are adjusted so that light rays detected by the photo-interrupters 18 and 19 pass through slits of the code plate 16 in different positions. When the rotary operation unit 12 is rotated, the code plate 16 is also rotated together with the rotating shaft 14, so that the two photo-interrupters 18 and 19 output rotation angle signals (encoder pulses) out of phase, respectively.

Rotating Member

The rotating shaft 14 is provided with a rotating member 20 that is positioned in substantially the middle of the second part 14b in the axial direction. The rotating member 20 includes, for example, a disc-shaped main body 20a. The main body 20a radially extends from the rotating shaft 14 (second part 14b). The main body 20a has a through-hole 20b at the center thereof. The through-hole 20b is formed so as to extend through the thickness of the main body 20a. The rotating member 20 is fixed to the rotating shaft 14 such that the rotating shaft 14 (second part 14b) is inserted through the through-hole 20b. Accordingly, when the rotary operation unit 12 is operated, the rotating member 20 is also rotated around the center axis CL together with the rotating shaft 14.

Factor Applying Frictional Resistance

The rotating shaft 14 is further provided with a friction plate 22 positioned next to the rotating member 20 in the longitudinal direction of the shaft. The friction plate 22 also has a main body 22a which is, for example, disc-shaped and an insertion hole 22b at the center of the main body 22a. The insertion hole 22b of the friction plate 22 also extends through the thickness of the main body 22a. The inner diameter of the insertion hole 22b is slightly larger than the diameter of the rotating shaft 14. Accordingly, the friction plate 22 is not fixed to the rotating shaft 14 (second part 14b). The friction plate 22 is supported so as to be rotatable about the center axis CL relative to the rotating shaft 14 and the rotating member 20.

The friction plate 22 can be slightly shifted in the axial direction of the rotating shaft 14 while the rotating shaft 14 (second part 14b) is inserted through the insertion hole 22b. For example, a bearing (not shown) slidable along the rotating shaft 14 may be provided between the outer surface of the rotating shaft 14 and the inner surface of the friction plate 22. The friction plate 22 is totally made of a magnetic material such as iron.

Electromagnetic Brake

The operation feel feedback input device 10 includes an electromagnetic brake 24. The electromagnetic brake 24 includes a case core 24a which is, for example, a hollow cylinder and further includes a hoop coil 24b which is disposed in the case core 24a. A bearing 24c made of resin is disposed in the center of the case core 24a. The other end (lower end in FIG. 1) of the rotating shaft 14 is rotatably supported by the case core 24a through the bearing 24c. When the hoop coil 24b is energized, the electromagnetic brake 24 allows the case core 24a to generate an electromagnetic force, thus attracting the friction plate 22 in the thrust direction (axial direction) of the rotating shaft 14.

The other end (second part 14b) of the rotating shaft 14 extends through and protrudes from the case core 24a in the direction (downward in FIG. 1) facing away from the rotating member 20 and the friction plate 22. The protruding rotating shaft 14 (second part 14b) is provided with a flange stopper 26. The flange stopper 26 prevents the rotating shaft 14 from coming away from the case core 24a toward the one end of the rotating shaft 14 (upward in FIG. 1).

The operation feel feedback input device 10 further includes a control unit 28 as an electrical component. The control unit 28 is connected to the photo-interrupters 18 and 19 and the electromagnetic brake 24. The configuration of a control system including the control unit 28 will be described later.

Operation of Applying Frictional Resistance

In the operation feel feedback input device 10, the above-described electromagnetic brake 24 is energized to attract the friction plate 22 to the electromagnetic brake 24, so that a frictional resistance can be applied to the rotating member 20 through the friction plate 22. Accordingly, the present embodiment uses an arrangement in which rotation is transmitted between the friction plate 22 and the rotating member 20.

Specifically, the friction plate 22 has two coupling projections 22c which project from one surface (in FIG. 1, the upper surface) of the friction plate 22. The coupling projections 22c each extend from the surface of the friction plate 22 (main body 22a) toward the rotating member 20. On the other hand, the rotating member 20 has coupling holes 20c positioned so as to correspond to the two coupling projections 22c, respectively. The coupling holes 20c extend through the thickness of the main body 20a. The coupling projections 22c are inserted through the coupling holes 20c, respectively. Each of the coupling projections 22c has such a length that the projection protrudes from the surface (upper surface in FIG. 1) of the rotating member 20 (main body 20a) by some extent while being inserted through the corresponding coupling hole 20c.

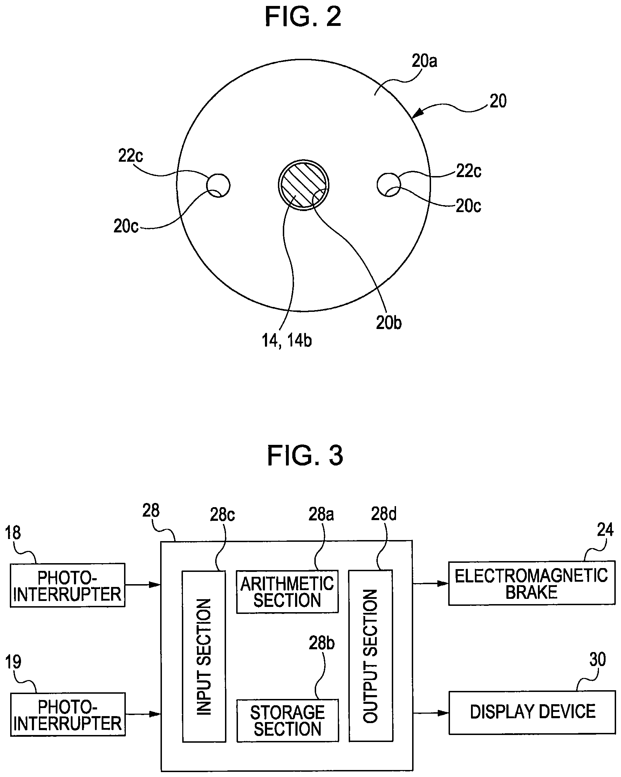

FIG. 2 is a plan view (including the cross section taken along the line II-II in FIG. 1) of the rotating member 20 coupled to the friction plate 22. Referring to FIG. 2, the two coupling projections 22c are inserted through the respective coupling holes 20c of the rotating member 20. In this state, the relative rotation between the rotating member 20 and the friction plate 22 is restricted. When the electromagnetic brake 24 attracts the friction plate 22, therefore, a frictional resistance is applied to the rotating member 20 through the friction plate 22. Since the movement of each coupling projection 22c in the axial direction within the corresponding coupling hole 20c is not restricted, a force acting in the axial direction is not applied to the whole of the rotating shaft 14.

Function of Elastic Member

When the rotary operation unit 12 is operated while the frictional resistance is applied to the rotating member 20, the elastic member 15 is twisted and deformed (i.e., elastically deformed) in the rotation direction. The material for the elastic member 15 has rigidity sufficiently resistant to torque at that time. Accordingly, even when the rotary operation unit 12 is operated such that the applied frictional resistance has a maximum value, the elastic member 15 does not yield or break. The elastic member 15 can therefore transmit an operation force applied to the rotary operation unit 12 from the first part 14a to the second part 14b and the rotating member 20 while being deformed within its normal elastic range. Consequently, when the operator applies a considerable operation force to the rotary operation unit 12, the rotary operation unit 12 can be continuously rotated while the friction plate 22 is being slipped relative to the electromagnetic brake 24.

On the other hand, when the operator moves his or her hand off the rotary operation unit 12 or weakens the operation force while the elastic member 15 undergoes the above-described elastic deformation, the elastic member 15 can be returned from the deformed state. In accordance with the return, the elastic member 15 slightly rotates the first part 14a, the rotary operation unit 12, and the code plate 16 in the opposite direction. When the operation force is not applied to the rotary operation unit 12 while the frictional resistance is applied thereto, the angle of rotation (hereinafter, also referred to as "rotation angle") of the rotary operation unit 12 is slightly changed in the direction opposite to the rotation direction.

Configuration of Control System

FIG. 3 is a block diagram schematically illustrating the configuration of the control system of the operation feel feedback input device 10. The control unit 28 includes a microcomputer that includes an arithmetic section 28a including, for example, a processor (CPU), a storage section 28b including memory devices, such as a RAM and a ROM, an input section 28c, and an output section 28d.

The rotation angle signals output from the photo-interrupters 18 and 19 are A/D converted by the input section 28c and are then input to the arithmetic section 28a. The arithmetic section 28a calculates the rotation angle and rotation direction of the rotating shaft 14 (rotary operation unit 12) on the basis of the input signals. The arithmetic section 28a also outputs a control signal on the basis of a result of calculation for the rotation angle and the rotation direction to control the actuation of the electromagnetic brake 24 (i.e., power supply to the electromagnetic brake 24). The control signal is converted through the output section 28d into drive current or drive voltage to be supplied to the electromagnetic brake 24.

Display Device

The operation feel feedback input device 10 according to this embodiment of the present invention can be used while being connected to a display device 30, serving as an external system. In this case, the operation feel feedback input device 10 can output an external output signal concerning display control through the control unit 28 to the display device 30.

For example, to display a pointer on a display screen (not illustrated) of the display device 30 in association with the rotation of the rotary operation unit 12, the control unit 28 outputs coordinate indicating the display position of the pointer as an external output signal. The display device 30 displays the pointer on the display screen on the basis of the coordinate indicated by the signal received from the control unit 28. Thus, the display device 30 can move the pointer on the display screen in real time in association with a change in the rotation angle of the rotary operation unit 12.

Display Examples

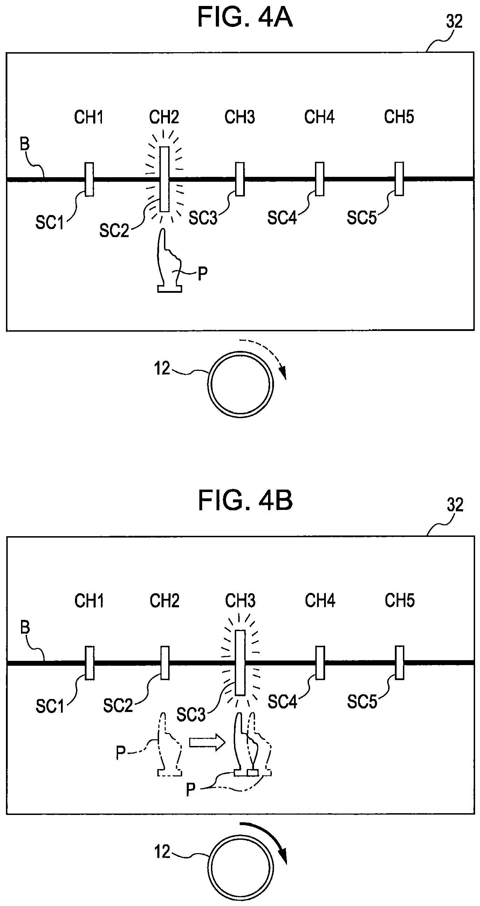

FIGS. 4A and 4B illustrate examples of display performed in association with a change in the rotation angle (coordinate) of the rotary operation unit 12.

Referring to FIG. 4A, a rod-like guide bar B is displayed across the display screen indicated at 32. A plurality of scales SC1, SC2, SC3, SC4, and SC5 are displayed such that the scales are arranged at regular intervals along the guide bar B. The respective scales SC1 to SC5 indicate, for example, selectable radio broadcast channels. Accordingly, text information items "CH1" to "CH5" are displayed above the scales SC1 to SC5.

In addition, a pointer P shaped in a hand mark is displayed below the guide bar B. The display position of the pointer P is shifted in association with the rotation angle of the rotary operation unit 12. In this display example, the scale SC2, which is being selected, indicated as valid at that time by the pointer P is displayed so as to be highlighted (for example, enlarged or lit on) as compared to the other scales SC1, SC3, SC4, and SC5.

For example, when the operator rotates the rotary operation unit 12 clockwise in the above-described state, the pointer P is shifted rightward on the display screen 32 in association with the rotation, so that the pointer P can be aligned with the next scale SC3, as shown in FIG. 4B. This operation allows a radio receiver (not shown) to actually switch the selected channel to another one (CH2 → CH3).

Example of Operation Feel Feedback

In the above-described display examples, the operation feel feedback input device 10 is used for channel selection of the radio receiver. Accordingly, it is preferred that the rotary operation unit 12, serving as a knob for channel switching, provide an operation feel. When the pointer P is shifted in, for example, the lateral direction on the display screen 32, therefore, the operation feel feedback input device 10 applies a frictional resistance between the adjacent scales of the scales SC1 to SC5, thus providing a clear click feel in response to a channel selection operation by the operator as follows.

For example, assuming that the operator rotates the rotary operation unit 12 clockwise in the state shown in FIG. 4A, the display position of the pointer P is shifted rightward in association with the rotation, as shown in FIG. 4B. At that time, the operation feel feedback input device 10 gradually increases a frictional resistance applied by the electromagnetic brake 24. When the pointer P reaches the midpoint between the scales SC2 and SC3, the operation feel feedback input device 10 applies a maximum frictional resistance. When the operator further rotates the rotary operation unit 12 against the frictional resistance, the frictional resistance decreases from the maximum value, so that the operation feel is lightened. A change in the operation feel (difference in frictional resistance) appears as a click feel.

If the pointer P is shifted on the display screen 32 with the above-described click feel, the clear operation feel indicating "one channel switching" can be provided to the operator. In addition, the highlight is switched from the scale SC2 to the scale SC3 on the display screen 32, thus resulting in a visual change. Consequently, such an extremely natural operation feel can be provided to the operator.

In the case where the display position of the pointer is operatively associated with the rotation angle of the rotary operation unit 12 as described above, the operator rotates the rotary operation unit 12 too forcefully in some cases (overrun). In this case, the pointer P does not stop in a position corresponding to any of the scales SC1 to SC5, as shown by an alternate long and two dashes line in FIG. 4B. Such a phenomenon may be caused because the operation feel feedback input device 10 has no function of allowing the rotary operation unit 12 to rotate independently.

In addition, assuming that the pointer P passes the scale SC3 on the display screen 32 and stops before the next scale SC4, this means that the rotation angle (coordinate) of the rotary operation unit 12 is actually changed. Accordingly, the operation feel feedback input device 10 has to actuate the electromagnetic brake 24 in accordance with the rotation angle at that time. The actuation of the electromagnetic brake 24 is still valid when the operator continuously rotates the rotary operation unit 12 to the right. After the operator moves his or her hand off the rotary operation unit 12, however, the actuation is wasted.

According to the present embodiment, the control unit 28 performs the following control process to eliminate the wasted actuation of the electromagnetic brake 24 and solve the misalignment of the display position of the pointer P. An example of the control process performed by the control unit 28 will be described below.

Control Process

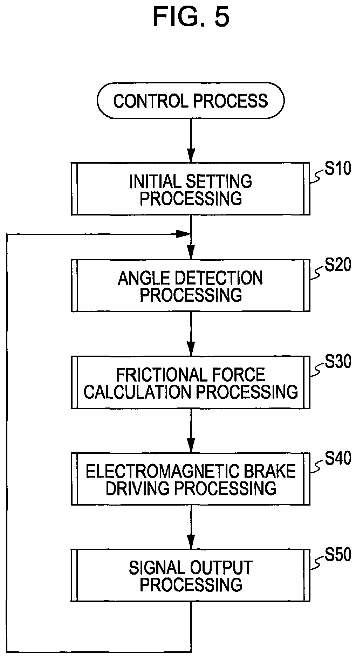

FIG. 5 is a flowchart illustrating exemplary steps of the control process implemented by the control unit 28 (principally by the arithmetic section 28a). The series of steps of the control process is stored as a control program in, for example, the storage section 28b. The control process will be described below in the following order of steps.

In step S10, the arithmetic section 28a performs initial setting processing. In this processing, for example, the detection signals supplied from the photo-interrupters 18 and 19 at that time are stored and such a state based on the detection signals is set to an initial position of the rotary operation unit 12. The arithmetic section 28a reads data concerning coordinate axes stored in the storage section 28b and sets the initial position of the rotary operation unit 12 on the coordinate axes as initial coordinate.

In step S20, the arithmetic section 28a performs angle detection processing. This processing is performed in order to detect the current rotation angle of the rotary operation unit 12. For example, the arithmetic section 28a detects which direction and at what angle the rotary operation unit 12 is rotated from the initial position set by the above-described initial setting processing. The arithmetic section 28a calculates the current coordinate corresponding to the rotation angle of the rotary operation unit 12 on the above-described coordinate axes on the basis of the detected rotation direction and rotation angle.

In step S30, the arithmetic section 28a performs frictional force calculation processing. This processing is performed in order to calculate the amplitude of a frictional force generated by the electromagnetic brake 24 on the basis of the current coordinate calculated by the above-described angle detection processing.

In step S40, the arithmetic section 28a performs electromagnetic brake driving processing. This processing is performed in order to actuate the electromagnetic brake 24 on the basis of a result of calculation by the above-described frictional force calculation processing, thereby applying a frictional resistance to the rotating member 20. Consequently, a frictional force (resistance force against an operation force) can be generated against an operation actually performed on the rotary operation unit 12 by the operator.

In step S50, the arithmetic section 28a performs signal output processing. This processing is performed in order to output an external output signal to the display device 30, serving as the external system. Specifically, the arithmetic section 28a outputs an external output signal indicating coordinate corresponding to the current rotation angle of the rotary operation unit 12 to the display device 30. The display device 30 controls the display position of the pointer P on the display screen 32 on the basis of the external output signal.

After power-on, the arithmetic section 28a steadily performs the above-described processing steps S20 to S50. Consequently, the coordinate corresponding to the current rotation angle of the rotary operation unit 12 are calculated in real time. In addition, the electromagnetic brake 24 is driven on the basis of the calculated coordinate, thereby changing a frictional resistance to be applied to the rotating member 20 in accordance with a change in the rotation angle.

Examples of Force Curve

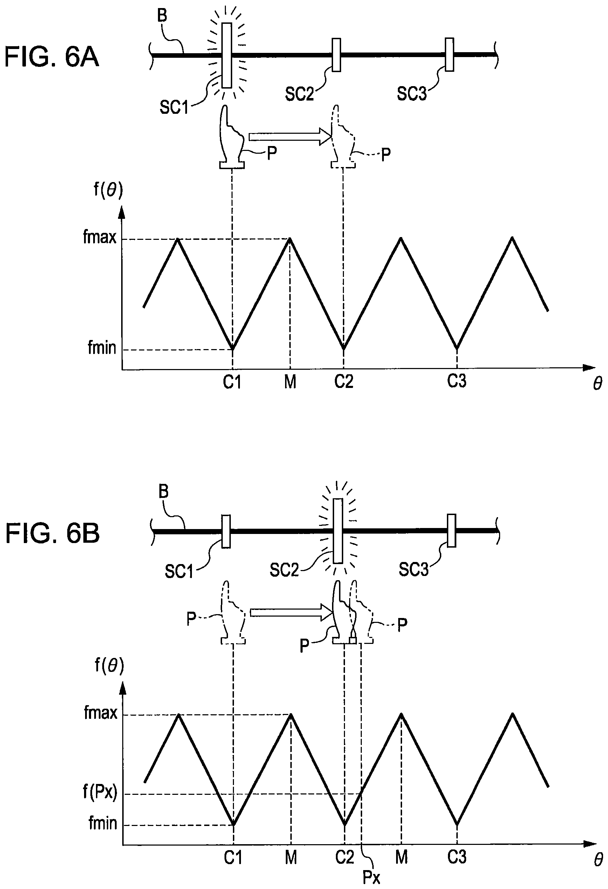

FIGS. 6A and 6B each illustrate an example of a force curve which can be used for frictional force calculation in the above-described frictional force calculation processing (step S30) in contrast with the above-described display examples.

Referring to FIG. 6A, the force curve shows the frictional force ($f(\theta)$) applied in accordance with the rotation angle ($\theta$) of the rotary operation unit 12 plotted against the rotation angle thereof. This force curve has a characteristic in which the frictional force repeats the increase and decrease in accordance with a change in the rotation angle and, in particular, the inclination of the frictional force at a maximum point remarkably differs from that at a minimum point, namely, the force curve has a profile repeating a peak and a valley.

In this case, a plurality of reference positions C1, C2, C3, ... are defined at regular intervals on the abscissa. The reference positions C1, C2, C3, ... correspond to the display positions of the scales SC1, SC2, SC3, ... on the display screen 32. The force curve has a characteristic in which the frictional force is reduced to a minimum value ($f_{min}$) in each of the reference positions C1, C2, C3, ... and is increased to a maximum value ($f_{max}$) in each of the midpoint between the adjacent reference positions.

Frictional Force in Reference Position

The frictional force ($f(\theta)$) is calculated using the above-described force curve. When the coordinate is located in any of the reference positions C1, C2, C3, ... on the abscissa, namely, the pointer P is positioned so as to indicate any of the scales SC1, SC2, SC3, ... on the display screen 32, the frictional force is controlled so as to be minimized ($f_{min}$). In the present embodiment, when the frictional force is minimized ($f_{min}$), the electromagnetic brake 24 is not actuated (power supply to the electromagnetic brake 24 is stopped) so that the rotary operation unit 12 is freely rotatable (only mechanical friction is applied to the rotary operation unit 12).

Frictional Force in Position Other Than Reference Positions

When the coordinate is located to the right or left of any of the reference positions C1, C2, C3, ... on the abscissa of the force curve, namely, the pointer P is misaligned with any of the scales SC1, SC2, SC3, ... on the display screen 32, control is performed so that the frictional force ($f(\theta)$) having a magnitude according to the rotation angle ($\theta$) is applied.

For example, it is assumed that the coordinate corresponding to the rotation angle of the rotary operation unit 12 are shifted rightward from the reference position C1 on the abscissa. In this case, display is performed so that the pointer P is shifted from the position corresponding to the scale SC1 to another one corresponding to the scale SC2 located on the right of the scale SC1, as shown by an arrow in FIG. 6A.

Ascending Interval

Assuming that the coordinate is located to the right of the reference position C1 and is shifted rightward, an interval between the reference position C1 and the midpoint M corresponds to an ascending interval of the force curve. Accordingly, when the coordinate is shifted rightward in this interval, the frictional force ($f(\theta)$) is increased to the maximum value (fmax) in accordance with a change in the rotation angle.

After Passing Midpoint

After that, when the coordinate pass the midpoint M, an interval up to the next reference position C2 corresponds to a descending interval of the force curve. Accordingly, as the coordinate is shifted rightward in this interval, the frictional force ($f(\theta)$) is rapidly reduced to the minimum value (fmin). In addition, since the frictional force changes from increase to decrease in this interval, the change (difference) causes a click feel on the rotary operation unit 12 as described above.

Upon Arrival at Next Reference Position

Referring to FIG. 6B, when the coordinate arrive at the next reference position C2, this position corresponds to a valley of the force curve. Since the frictional force ($f(\theta)$) becomes the minimum value (fmin) when the coordinate arrive at the reference position C2, the frictional force caused by the electromagnetic brake 24 is not applied to the rotary operation unit 12. In addition, the pointer P is shifted to a position for indicating the next scale SC2 as valid on the display screen 32, so that the scale SC2 is highlighted.

Upon Passing Reference Position

It is assumed that the coordinate pass the reference position C2 and are further shifted rightward. An interval between the reference position C2 and the next midpoint M on the right side of the position C2 corresponds to an ascending interval of the force curve. Accordingly, if the operator rotates the rotary operation unit 12 too forcefully such that the coordinate pass the reference position C2, a frictional force ($f(Px)$) associated with coordinate (Px) at that time is generated basically. On the display screen 32, the pointer P, indicated by an alternate long and two dashes line in FIG. 6B, is displayed in a position slightly deviated rightward from the scale SC2 in accordance with the coordinate (Px).

At Completion of Operation

In the present embodiment, in the case where the coordinate is shifted on the right of the reference position C2, when the operator stops operating the rotary operation unit 12 at that time, control is performed so that the coordinate is replaced with those corresponding to the reference position C2. Consequently, the frictional force to be applied is minimized (fmin) and the display position of the pointer P, indicated by a solid line in FIG. 6B, is just aligned to the scale SC2 on the display screen 32. Such a process will be concretely described below.

Frictional Force Calculation Processing

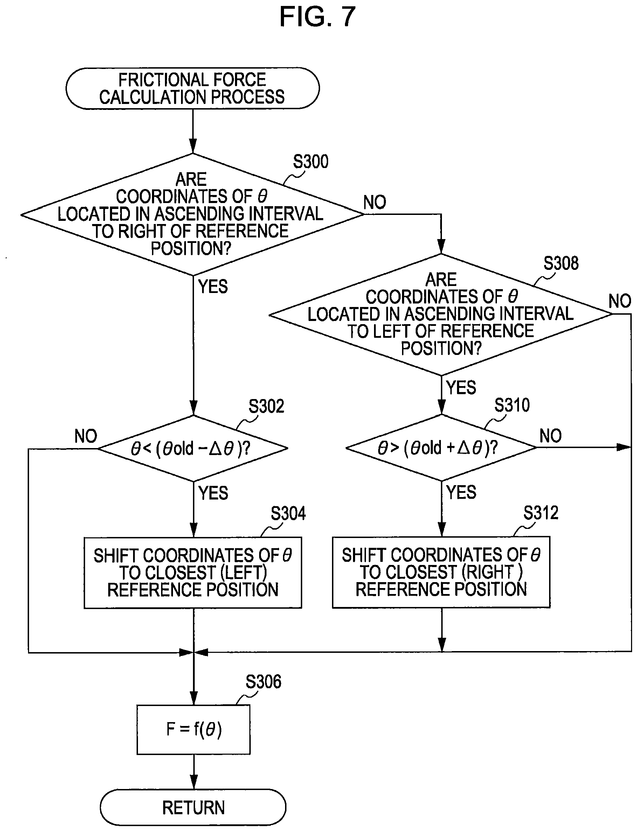

FIG. 7 is a flowchart concretely illustrating exemplary steps of the frictional force calculation processing (or process) performed in the above-described control process. According to the present embodiment, the above-described replacement of coordinate can be performed in this process.

Upon Shifting Rightward

Shifting the coordinate rightward on the abscissa will now be described.

In step S300, the arithmetic section 28a determines whether the coordinate of the rotation angle ($\theta$) is located in the ascending interval to the right of any reference position on the abscissa. The determination has to be done in consideration of not only the rotation angle at that time but also the rotation direction of the rotary operation unit 12 rotated so far.

For example, when an operation force for shifting the coordinate rightward on the abscissa is applied to the rotary operation unit 12 and the coordinate is located between the reference position C1 and the midpoint M, as shown in FIG. 6A, the arithmetic section 28a can determine that the coordinate corresponding to the rotation angle ($\theta$) is located in the ascending interval on the right side of the reference position C1 (YES in step S300). In this case, the arithmetic section 28a subsequently performs the next step S302.

In step S302, the arithmetic section 28a determines whether the rotation angle ($\theta$) is reduced to be less than the preceding rotation angle ($\theta$old) by a predetermined degree ($\Delta\theta$) (on the condition that rightward shift along the abscissa represents increase (+)). Specifically, the arithmetic section 28a determines whether the following conditional expression is satisfied.

$$\theta < (\theta\text{old} - \Delta\theta) \quad ... (1)$$

The predetermined angle ($\Delta\theta$) can be set on the basis of the angle of rotation caused by the return of the elastic member 15 from its elastically deformed state. The preceding rotation angle ($\theta$old) is a value detected at the preceding process execution time. When it is determined that the above-described conditional expression (1) is satisfied (YES in step S302), the arithmetic section 28a subsequently performs the next step S304.

In step S304, the arithmetic section 28a shifts the coordinate of the rotation angle ($\theta$) to the closest (left) reference position on the abscissa. Thus, the coordinate corresponding to the rotation angle ($\theta$) is replaced with those of the reference position. For example, referring to FIG. 6B, the coordinate (Px) on the right side of the reference position C2 is replaced with those of the reference position C2.

In step S306, the arithmetic section 28a calculates the magnitude of a frictional force to be applied on the basis of the replaced coordinate. Specifically, the arithmetic section 28a performs the calculation on the basis of the force curve shown in FIGS. 6A and 6B, thus determining the minimum frictional force (fmin).

Control of Electromagnetic Brake

In this case, even if the arithmetic section 28a is returned to the control process and performs the electromagnetic brake driving processing (step S40 in FIG. 5), the electromagnetic brake 24 is not energized (a driving current and a driving voltage are set to zero).

Display Operation

When the arithmetic section 28a performs the signal output processing (step S50 in FIG. 5), the replaced coordinate is output as an external output signal. Thus, the pointer P can be displayed in a position for correctly indicating the scale SC2 on the display screen 32.

In particular, when it is determined in step S302 that the rotation angle ($\theta$) is not reduced (NO in step S302), the arithmetic section 28a performs step S306 without performing step S304. In this case, the arithmetic section 28a calculates the frictional force (f($\theta$)) on the basis of the coordinate of the rotation angle ($\theta$) at that time.

Upon Shifting Leftward

Shifting the coordinate leftward on the abscissa will now be described.

In step S300, when the coordinate is shifted leftward, the arithmetic section 28a does not determine that the coordinate of the rotation angle ($\theta$) is located in the ascending interval to the right of the reference position C1 (NO in step S300). Accordingly, the arithmetic section 28a performs step S308.

In step S308, the arithmetic section 28a determines whether the coordinate of the rotation angle ($\theta$) is located in the ascending interval to the left of any reference position on the abscissa. For example, when an operation force for shifting the coordinate leftward (in the direction opposite to the arrow in FIG. 6B) on the abscissa is applied to the rotary operation unit 12 and the coordinate is located between the reference position C2 and the midpoint M, the arithmetic section 28a can determine that the coordinate of the rotation angle ($\theta$) is located in the ascending interval on the left side of the reference position C2 (YES in step S308). In this case, the arithmetic section 28a performs the next step S310.

In step S310, the arithmetic section 28a determines whether the rotation angle ($\theta$) is increased to be greater than the preceding rotation angle ($\theta$old) by the predetermined angle ($\Delta\theta$) (on the condition that leftward shift along the abscissa represents decrease (-)). Specifically, the arithmetic section 28a determines whether the following conditional expression (2) is satisfied.

$$\theta > (\theta\text{old} + \Delta\theta) \quad ... (2)$$

When determining that the above-described expression (2) is satisfied (YES in step S310), the arithmetic section 28a performs the next step S312.

In step S312, the arithmetic section 28a shifts the coordinate of the rotation angle ($\theta$) to the closest (right) reference position on the abscissa. Thus, the coordinate of the rotation angle ($\theta$) is replaced with those of the reference position.

In step S306, the arithmetic section 28a calculates the magnitude of a frictional force to be applied on the basis of the replaced coordinate. In this case, the calculation is similarly performed on the basis of the force curve shown in FIGS. 6A and 6B, thereby determining the minimum frictional force (fmin).

When the arithmetic section 28a similarly returns to the control process and performs the electromagnetic brake driving processing (step S40 in FIG. 5), the electromagnetic brake 24 is not energized (the driving current and the driving voltage are set to zero). When the arithmetic section 28a performs the signal output processing (step S50 in FIG. 5), the replaced coordinate is output as an external output signal. Thus, the pointer P is displayed in a position for correctly indicating the scale SC2 on the display screen 32.

If it is determined in step S310 that the rotation angle ($\theta$) is not increased (NO in step S310), the arithmetic section 28a performs step S306 without performing step S312. In this case, the arithmetic section 28a calculates the frictional force (f($\theta$)) on the basis of the coordinate of the rotation angle ($\theta$) at that time.

Example of Shifting Coordinate

In the present embodiment, the above-described control can be performed in, for example, the following two cases of coordinate shift:

First case where the coordinate of the rotation angle ($\theta$)is located in any of the reference positions C1, C2, C3, ... from the beginning, an operation for shifting the coordinate rightward or leftward is performed, and after that, the operation is stopped in the ascending interval; and

Second case where the coordinate of the rotation angle ($\theta$)isto the left (or right) of any of the reference positions C1, C2, C3, ..., the coordinate is shifted from such a position in the descending interval of the force curve and pass the reference position, an operation for shifting the coordinate rightward (or leftward) is performed, and after that, the operation is stopped in the ascending interval.

In each of the above-described first and second cases, since the operation is stopped, either one of the conditional expressions (1) and (2) is satisfied. Accordingly, the arithmetic section 28a can replace the coordinate of the rotation angle ($\theta$) with those of the closest reference position.

Coordinate in Descending Interval

When it is determined on the basis of the rotation direction that the coordinate is located in the descending interval of the force curve, each of the conditional expression (1) and the conditional expression (2) is not satisfied (NO in each of steps S300 and S308). In this case, the arithmetic section 28a calculates the frictional force (f($\theta$)) on the basis of the current coordinate of the rotation angle ($\theta$).

According to the present embodiment, as described above, in the case where an operation for shifting the coordinate rightward (or leftward) in the ascending interval to the right (or left) of any reference position on the abscissa is being performed on the rotary operation unit 12, when the operator stops the operation on the rotary operation unit 12, the coordinate is replaced with those of the reference position in the control, thus securely preventing power from being wasted after the operator stops the operation. In addition, since an external output signal indicating the replaced coordinate is output to the display device 30, the pointer P can be securely prevented from being stopped in a position deviated from any of the scales SC1, SC2, SC3, ... on the display screen 32. This contributes to improvement of the appearance of displays.

Another Example of Force Curve

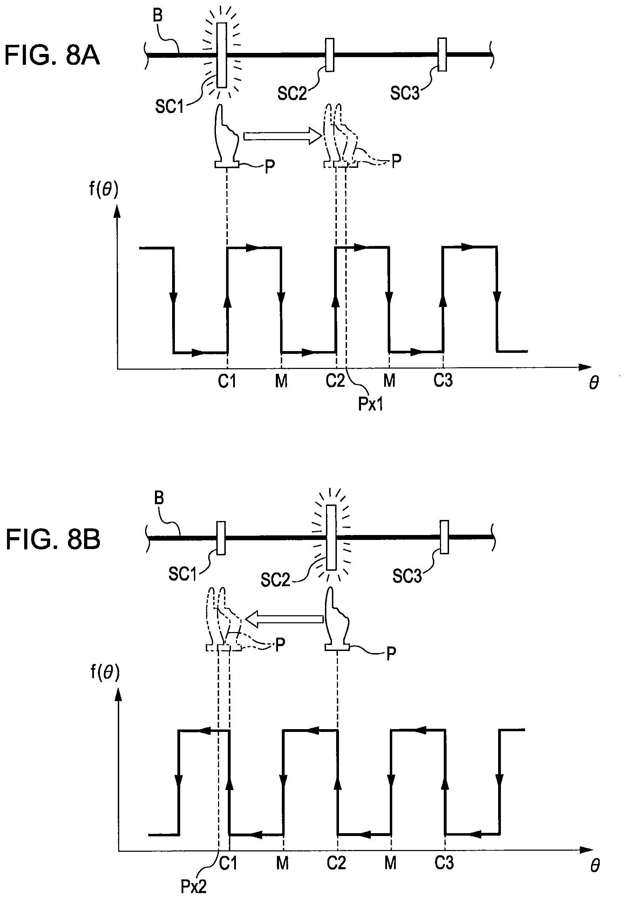

FIGS. 8A and 8B are diagrams each illustrating another example of the force curve available in the frictional force calculation processing in contrast with other display examples.

Upon Shifting Rightward

Referring to FIG. 8A, this force curve has a characteristic in which, for example, when the coordinate is shifted rightward on the abscissa, a frictional force is instantaneously maximized in each of the reference positions C1, C2, C3, ... and the maximum frictional force is maintained until the coordinate reach the midpoint M to the right of the reference position. When the coordinate reach the midpoint M, the frictional force is instantaneously minimized and the minimum frictional force is maintained until the coordinate reach the next reference position.

Examples of Operation Feel

In the use of the above-described force curve, when the pointer P is shifted rightward from the scale SC1 on the display screen 32, a maximum frictional resistance is suddenly generated. Accordingly, an operation feel provided to the operator is very heavy. When the coordinate reach the midpoint M, the frictional resistance instantaneously disappears. Accordingly, an operation burden is rapidly lightened and any frictional resistance is not generated until the coordinate reach the next reference position C2. Consequently, the operator can sense such a click feel that the pointer P can be instantaneously shifted to the next scale SC2 after the coordinate pass the midpoint M.

Although the operator intends to stop the rotary operation unit 12 in, for example, the reference position C2, the rotary operation unit 12 actually stops in coordinate Px1 to the right of the reference position C2 because of overrun in some cases. In this case, the arithmetic section 28a performs the process similar to the above-described one to replace the coordinate Px1 upon stopping with those of the reference position C2. This prevents power from being wasted after the operator stops the operation. In addition, the pointer P can be prevented from being stopped in a position misaligned with the scale SC2 on the display screen 32.

Upon Shifting Leftward

Referring to FIG. 8B, this force curve has a different characteristic depending on the shifting direction of coordinate. Specifically, when the coordinate is shifted leftward on the abscissa, the frictional force is instantaneously maximized in each of the reference positions C1, C2, C3, ... in a manner similar to the above-described case. In the characteristic of the curve, the maximum frictional force is maintained until the coordinate reach the midpoint M to the left of the reference position. When the coordinate reach the midpoint M, the frictional force is instantaneously minimized. The minimum frictional force is maintained until the coordinate reach the next (left) reference position. An operation feel provided to the operator upon shifting the coordinate leftward may be sensed by the operator in symmetrical relation to that provided upon shifting the coordinate rightward.

Although the operator intends to stop the rotary operation unit 12 in, for example, the reference position C1, the rotary operation unit 12 actually stops in coordinate Px2 to the left of the reference position C1 because of overrun in some cases. In this case, the arithmetic section 28a performs the process similar to the above-described one to replace the coordinate Px2 upon stopping with those of the reference position C1. This similarly prevents power from being wasted after the operator stops the operation. In addition, the pointer P can be prevented from being stopped in a position misaligned with the scale SC1 on the display screen 32.

The present invention is not limited to the above-described embodiment and many modifications thereof can be made. In the above-described embodiment, the rotary operation unit 12 is knob-shaped. The rotary operation unit 12 may be shaped in a drum, stick, or sphere.

Although the rotary operation unit 12 is rotated clockwise or counterclockwise as viewed from the operator, the rotary operation unit 12 can be rotated forward and backward and can also be rotated obliquely. The above-described embodiment has been described with respect to the case where the pointer P is shifted horizontally for indication. The pointer P may be shifted vertically or obliquely.

In the above-described embodiment, the elastic member 15 includes a rubber material. The elastic member 15 may include, for example, a coil spring or a flat spring. The elastic member 15 may be made using the elasticity of a resin material.

The force curve for the electromagnetic brake 24 is not limited to the examples (chevron and rectangular patterns) described with reference to the drawings. Another pattern (for example, a trapezoidal pattern) may be used as the force curve.

The rotation state is detected in the combination of the code plate 16 and the photo-interrupters 18 and 19. For example, the detection of the rotation state can be achieved in the combination of a reflector and a photoswitch.

It is to be understood that the shape and arrangement of the parts herein described and shown in the drawings are preferred examples and various changes in the shape and arrangement of the parts may be made upon embodying the present invention. The invention is defined by the appended claims.

## Claims

1. An operation feel feedback input device comprising:

   a rotary operation unit (12) that rotates in response to an operation force applied by an operator;
   detecting means (18, 19) that detects the angle of rotation of the rotary operation unit (12);
   a rotating member (20) that rotates together with the rotary operation unit (12);
   frictional resistance applying means (24) that applies a frictional resistance to the rotating member (20) to generate a resistance force against the operation force applied by the operator; and
   control means (28) that controls the frictional resistance application by the frictional resistance applying means (24) on the basis of a result of detection by the detecting means (18, 19), **characterized in that**
   while a coordinate (Px) corresponding to the angle of rotation of the rotary operation unit (12) is on either one of the right and left sides of a previously defined reference position (C2) on a predetermined coordinate axis, when the control means (28) determines that an operation force for shifting the coordinate toward the one side from the reference position (C2) is applied to the rotary operation unit (12), the control means (28) controls the application by the frictional resistance applying means (24) in order to increase the frictional resistance in accordance with a change in the angle of rotation detected by the detecting means (18, 19), and when determining that the operation force for shifting the coordinate toward the one side from the reference position is not applied to the rotary operation unit (12) during the control, the control means (28) replaces the coordinate (Px) corresponding to the angle of rotation of the rotary operation unit (12) with a coordinate (C2) of the reference position (C2) in the control of the application,
   the frictional resistance applying means (24) includes an electromagnetic brake (24) that generates an electromagnetic force in response to power supply and applies a frictional resistance to the rotating member (20) using the electromagnetic force,
   the control means (28) is capable of adjusting the magnitude of current or voltage for the power supply to the electromagnetic brake (24) to control the magnitude of the frictional resistance to be applied by the frictional resistance applying means (24), and

when the coordinate corresponding to the angle of rotation of the rotary operation unit (12) is located in the reference position (C2) on the coordinate axis, the control means (28) stops the power supply to the electromagnetic brake (24); and

the control means (28) further includes a signal output section that outputs a coordinate corresponding to the angle of rotation detected by the detecting means (18, 19) as an external output signal, and

when the coordinate corresponding to the angle of rotation is replaced with the coordinate (C2) of the reference position (C2) in the control of the application, the replaced coordinate (C2) is output as the external output signal from the signal output section.

2. The device according to Claim 1, further comprising:

an elastic member (15) interposed between the rotary operation unit (12) and the rotating member (20), the elastic member (15) being elastically deformed by an operation force, applied to the rotary operation unit (12) while a frictional resistance is applied to the rotating member (20), to allow the rotary operation unit (12) to rotate, **characterized in that**

when the coordinate (Px) corresponding to the angle of rotation of the rotary operation unit (12) is shifted in the direction from the one side to the other side on the coordinate axis by a predetermined amount upon return of the elastic member (15) from its elastically deformed state, the control means (28) determines that the operation force for shifting the coordinate toward the one side from the reference position (C2) is not applied to the rotary operation unit (12).

3. The device according to Claim 1 or 2, **characterized in that**

the control means (28) determines the magnitude of a frictional resistance to be applied by the frictional resistance applying means (24) on the basis of a force curve in which the frictional resistance is minimized in each of reference positions (C1, C2, C3) defined on the coordinate axis and the frictional resistance is maximized in a coordinate (M) between the two adjacent reference positions,

when determining that the coordinate corresponding to the angle of rotation of the rotary operation unit (12) is shifted from either one of the right and left sides of one (C2) of the reference positions to the other side so as to pass the reference position (C2) in response to an operation force applied to the rotary operation unit (12) and also determining that the operation force for shifting the coordinate toward the other side from the reference position (C2) is applied to the rotary operation unit (12), the control means (28) controls the application by the frictional resistance applying means (24) in order to increase the frictional resistance in accordance with a change in the angle of rotation detected by the detecting means (18, 19),

when determining that the operation force for shifting the coordinate toward the other side from the reference position (C2) is not applied to the rotary operation unit (12) during the control, the control means (28) replaces the coordinate (Px) corresponding to the angle of rotation of the rotary operation unit (12) with the coordinate (C2) of the reference position (C2) in the control of the application.

4. The device according to any of Claims 1 to 3, further comprising:

an elastic member (15) interposed between the rotary operation unit (12) and the rotating member (20), the elastic member (15) being elastically deformed by an operation force, applied to the rotary operation unit (12) while a frictional resistance is applied to the rotating member (20), to allow the rotary operation unit (12) to rotate, **characterized in that**

when the coordinate corresponding to the angle of rotation of the rotary operation unit (12) is shifted in the direction from the other side to the one side on the coordinate axis by a predetermined amount upon return of the elastic member (15) from its elastically deformed state, the control means (28) determines that the operation force for shifting the coordinate toward the other side from the reference position is not applied to the rotary operation unit (12).

**Patentansprüche**

1. Eingabevorrichtung mit Betätigungsgefühl-Rückmeldung, aufweisend:

eine Drehbetätigungseinheit (12), die sich in Reaktion auf eine von einer Bedienungsperson aufgebrachte Betätigungskraft dreht;
eine Detektionseinrichtung (18, 19), die den Rotationswinkel der Drehbetätigungseinheit (12) detektiert;
ein Drehelement (20), das sich zusammen mit der Drehbetätigungseinheit (12) dreht;
eine Reibungswiderstand-Aufbringeinrichtung (24), die einen Reibungswiderstand auf das Drehelement (20) aufbringt, um eine Widerstandskraft gegen die von der Bedienungsperson aufgebrachte Betätigungskraft zu erzeugen; und

eine Steuereinrichtung (28), die die Aufbringung des Reibungswiderstands durch die Reibungswiderstands-Aufbringeinrichtung (24) auf der Basis eines Detektionsresultats durch die Detektionseinrichtung (18, 19) steuert,
**dadurch gekennzeichnet, dass** dann, wenn eine dem Rotationswinkel der Drehbetätigungseinheit (12) entsprechende Koordinate (Px) entweder auf der rechten oder auf der linken Seite von einer zuvor definierten Referenzposition (C2) auf einer vorbestimmten Koordinatenachse liegt und die Steuereinrichtung (28) feststellt, dass eine Betätigungskraft zum Verlagern der Koordinate in Richtung auf die eine Seite von der Referenzposition (C2) auf die Drehbetätigungseinheit (12) aufgebracht wird, die Steuereinrichtung (28) das Aufbringen durch die Reibungswiderstands-Aufbringeinrichtung (24) zur Erhöhung des Reibungswiderstands in Abhängigkeit von einer Änderung des von der Detektionseinrichtung (18, 19) detektierten Rotationswinkels steuert, und bei Feststellung, dass die Betätigungskraft zum Verlagern der Koordinate in Richtung auf die eine Seite von der Referenzposition während der Steuerung nicht auf die Drehbetätigungseinheit (12) aufgebracht wird, die Steuereinrichtung (28) die dem Rotationswinkel der Drehbetätigungseinheit (12) entsprechende Koordinate (Px) durch eine Koordinate (C2) der Referenzposition (C2) bei der Steuerung der Aufbringung ersetzt,
wobei die Reibungswiderstands-Aufbringeinrichtung (24) eine elektromagnetische Bremse (24) aufweist, die in Reaktion auf eine Stromzufuhr eine elektromagnetische Kraft erzeugt und einen Reibungswiderstand auf das Drehelement (20) unter Verwendung der elektromagnetischen Kraft aufbringt,
wobei die Steuereinrichtung (28) in der Lage ist, die Größe des Stroms oder der Spannung für die Stromzufuhr zu der elektromagnetischen Bremse (24) einzustellen, um die Größe des von der Reibungswiderstands-Aufbringeinrichtung (24) aufzubringenden Reibungswiderstands zu steuern, und
dann, wenn die dem Rotationswinkel der Drehbetätigungseinheit (12) entsprechende Koordinate sich in der Referenzposition (C2) auf der Koordinatenachse befindet, die Steuereinrichtung (28) die Stromzufuhr zu der elektromagnetischen Bremse (24) stoppt; und
wobei die Steuereinrichtung (28) ferner einen Signalausgabebereich aufweist, der eine Koordinate, die dem von der Detektionseinrichtung (18, 19) detektierten Rotationswinkel entspricht, als externes Ausgangssignal abgibt, und

wobei dann, wenn die dem Rotationswinkel entsprechende Koordinate durch die Koordinate (C2) der Referenzposition (C2) bei der Steuerung der Aufbringung ersetzt wird, die ersetzte Koordinate (C2) als das externe Ausgangssignal von dem Signalausgabebereich abgegeben wird.

2. Vorrichtung nach Anspruch 1,
weiterhin aufweisend:

ein zwischen der Drehbetätigungseinheit (12) und dem Drehelement (20) angeordnetes elastisches Element (15), wobei das elastische Element (15) durch eine Betätigungskraft elastisch verformt wird, die auf die Drehbetätigungseinheit (12) aufgebracht wird, während ein Reibungswiderstand auf das Drehelement (20) aufgebracht wird, um der Drehbetätigungseinheit (12) eine Drehung zu ermöglichen,
**dadurch gekennzeichnet, dass** dann, wenn die dem Rotationswinkel der Drehbetätigungseinheit (12) entsprechende Koordinate (Px) in der Richtung von der einen Seite zu der anderen Seite auf der Koordinatenachse um einen vorbestimmten Betrag verlagert wird, bei Rückkehr des elastischen Elements (15) aus seinem elastisch verformten Zustand die Steuereinrichtung (28) die Feststellung trifft, dass die Betätigungskraft zum Verlagern der Koordinate in Richtung auf die eine Seite von der Referenzposition (C2) nicht auf die Drehbetätigungseinheit (12) aufgebracht wird.

3. Vorrichtung nach Anspruch 1 oder 2,
**dadurch gekennzeichnet, dass** die Steuereinrichtung (28) die Größe eines Reibungswiderstands, der von der Reibungswiderstands-Aufbringeinrichtung (24) aufzubringen ist, auf der Basis einer Kraftkurve bestimmt, bei der der Reibungswiderstand in jeder der auf der Koordinatenachse definierten Referenzpositionen (C1, C2, C3) minimiert ist und der Reibungswiderstand bei einer Koordinate (M) zwischen den zwei benachbarten Referenzpositionen maximiert ist,
wobei bei Feststellung, dass die dem Rotationswinkel der Drehbetätigungseinheit (12) entsprechende Koordinate entweder von der rechten oder der linken Seite von einer (C2) der Referenzpositionen zu der anderen Seite unter Durchlaufung der Referenzposition (C2) in Reaktion auf eine auf die Drehbetätigungseinheit (12) aufgebracht Betätigungskraft verlagert wird, und außerdem bei Feststellung, dass die Betätigungskraft zum Verlagern der Koordinate in Richtung auf die andere Seite von der Referenzposition (C2) auf die Drehbetätigungseinheit (12) aufgebracht wird, die Steuereinrichtung (28) die Aufbringung durch die Reibungswiderstands-Aufbringeinrichtung (24) zur Erhöhung des Reibungswiderstandes in Abhängigkeit von einer von der Detektionseinrichtung (18, 19) detektierten Änderung des Rotationswinkels steuert,

wobei bei Feststellung, dass die Betätigungskraft zum Verlagern der Koordinate in Richtung auf die andere Seite von der Referenzposition (C2) während der Steuerung nicht auf die Drehbetätigungseinheit (12) aufgebracht wird, die Steuereinrichtung (28) die dem Rotationswinkel der Drehbetätigungseinheit (12) entsprechende Koordinate (Px) bei der Steuerung der Aufbringung durch die Koordinate (C2) der Referenzposition (C2) ersetzt.

4. Vorrichtung nach einem der Ansprüche 1 bis 3, weiterhin aufweisend:

ein zwischen der Drehbetätigungseinheit (12) und dem Drehelement (20) angeordnetes elastisches Element (15), wobei das elastische Element (15) durch eine Betätigungskraft elastisch verformt wird, die auf die Drehbetätigungseinheit (12) aufgebracht wird, während ein Reibungswiderstand auf das Drehelement (20) aufgebracht wird, um der der Drehbetätigungseinheit (12) eine Drehung zu ermöglichen, **dadurch gekennzeichnet, dass** dann, wenn die dem Rotationswinkel der Drehbetätigungseinheit (12) entsprechende Koordinate in der Richtung von der anderen Seite zu der einen Seite auf der Koordinatenachse um einen vorbestimmten Betrag verlagert wird, bei Rückkehr des elastischen Elements (15) aus seinem elastisch verformten Zustand die Steuereinrichtung (28) die Feststellung trifft, dass die Betätigungskraft zum Verlagern der Koordinate in Richtung auf die andere Seite von der Referenzposition nicht auf die Drehbetätigungseinheit (12) aufgebracht wird.

## Revendications

1. Dispositif d'entrée à retour de sensation d'actionnement comprenant :

une unité d'actionnement rotative (12) qui tourne en réponse à une force d'actionnement appliquée par un opérateur ;
un moyen de détection (18, 19) qui détecte l'angle de rotation de l'unité d'actionnement rotative (12) ;
un élément tournant (20) qui tourne avec l'unité d'actionnement rotative (12) ;
un moyen d'application de résistance de frottement (24) qui applique une résistance de frottement à l'élément tournant (20) pour générer une force de résistance contre la force d'actionnement appliquée par l'opérateur ; et
un moyen de commande (28) qui commande l'application de résistance de frottement réalisée par le moyen d'application de résistance de frottement (24) en se basant sur un résultat de détection fourni par le moyen de détection (18, 19),

**caractérisé en ce que**

quand une coordonnée (Px) correspondant à l'angle de rotation de l'unité d'actionnement rotative (12) se trouve du côté droit ou gauche d'une position de référence préalablement définie (C2) sur un axe de coordonnées prédéterminé, quand le moyen de commande (28) détermine qu'une force d'actionnement pour décaler la coordonnée vers le premier côté depuis la position de référence (C2) est appliquée à l'unité d'actionnement rotative (12), le moyen de commande (28) commande l'application par le moyen d'application de résistance de frottement (24) afin d'augmenter la résistance de frottement selon une variation de l'angle de rotation détecté par le moyen de détection (18, 19), et lorsqu'il détermine que la force d'actionnement pour décaler la coordonnée vers le premier côté depuis la position de référence n'est pas appliquée à l'unité d'actionnement rotative (12) pendant la commande, le moyen de commande (28) remplace la coordonnée (Px) correspondant à l'angle de rotation de l'unité d'actionnement rotative (12) par une coordonnée (C2) de la position de référence (C2) dans la commande de l'application,

le moyen d'application de résistance de frottement (24) comprend un frein électromagnétique (24) qui produit une force électromagnétique en réponse à une alimentation électrique et applique une résistance de frottement à l'élément tournant (20) en utilisant la force électromagnétique,

le moyen de commande (28) est capable de régler l'amplitude de courant ou de tension de l'alimentation électrique délivrée au frein électromagnétique (24) pour commander l'amplitude de la résistance de frottement devant être appliquée par le moyen d'application de résistance de frottement (24), et

quand la coordonnée qui correspond à l'angle de rotation de l'unité d'actionnement rotative (12) se trouve dans la position de référence (C2) sur l'axe de coordonnées, le moyen de commande (28) arrête l'alimentation électrique délivrée au frein électromagnétique (24) ; et

le moyen de commande (28) comprend en outre une section de sortie de signal qui délivre une coordonnée correspondant à l'angle de rotation détecté par le moyen de détection (18, 19) en tant que signal de sortie externe, et

quand la coordonnée qui correspond à l'angle de rotation est remplacée par la coordonnée (C2) de la position de référence (C2) dans la commande de l'application, la coordonnée remplacée (C2) est délivrée par la section de sortie de signal en tant que signal de sortie externe.

2. Dispositif selon la revendication 1, comprenant en outre :

un élément élastique (15) intercalé entre l'unité d'actionnement rotative (12) et l'élément tournant (20), l'élément élastique (15) étant déformé de façon élastique par une force d'actionnement, appliquée à l'unité d'actionnement rotative (12) pendant qu'une résistance de frottement est appliquée à l'élément tournant (20), pour permettre à l'unité d'actionnement rotative (12) de tourner, **caractérisé en ce que**
quand la coordonnée (Px) qui correspond à l'angle de rotation de l'unité d'actionnement rotative (12) est décalée d'une quantité prédéterminée dans la direction qui va du premier côté à l'autre côté sur l'axe de coordonnées lors du retour de l'élément élastique (15) depuis son état déformé de façon élastique, le moyen de commande (28) détermine que la force d'actionnement pour décaler la coordonnée vers le premier côté depuis la position de référence (C2) n'est pas appliquée à l'unité d'actionnement rotative (12).

3. Dispositif selon la revendication 1 ou 2, **caractérisé en ce que**
le moyen de commande (28) détermine l'amplitude d'une résistance de frottement devant être appliquée par le moyen d'application de résistance de frottement (24) en se basant sur une courbe de force dans laquelle la résistance de frottement est minimisée en des positions de référence (C1, C2, C3) définies sur l'axe de coordonnées et la résistance de frottement est maximisée en une coordonnée (M) située entre les deux positions de référence adjacentes, lorsqu'il détermine que la coordonnée qui correspond à l'angle de rotation de l'unité d'actionnement rotative (12) est décalée par rapport au côté droit ou gauche de l'une (C2) des positions de référence vers l'autre côté afin de passer la position de référence (C2) en réponse à une force d'actionnement appliquée à l'unité d'actionnement rotative (12) et lorsqu'il détermine aussi que la force d'actionnement pour décaler la coordonnée vers l'autre côté de la position de référence (C2) est appliquée à l'unité d'actionnement rotative (12), le moyen de commande (28) commande l'application réalisée par le moyen d'application de résistance de frottement (24) afin d'augmenter la résistance de frottement selon une variation de l'angle de rotation détecté par le moyen de détection (18, 19),

lorsqu'il détermine que la force d'actionnement pour décaler la coordonnée vers l'autre côté de la position de référence (C2) n'est pas appliquée à l'unité d'actionnement rotative (12) pendant la commande, le moyen de commande (28) remplace la coordonnée (Px) correspondant à l'angle de rotation de l'unité d'actionnement rotative (12) par la coordonnée (C2) de la position de référence (C2) dans la commande de l'application.

4. Dispositif selon l'une quelconque des revendications 1 à 3, comprenant en outre :

un élément élastique (15) intercalé entre l'unité d'actionnement rotative (12) et l'élément tournant (20), l'élément élastique (15) étant déformé de façon élastique par une force d'actionnement, appliquée à l'unité d'actionnement rotative (12) pendant qu'une résistance de frottement est appliquée à l'élément tournant (20), pour permettre à l'unité d'actionnement rotative (12) de tourner, **caractérisé en ce que**
quand la coordonnée qui correspond à l'angle de rotation de l'unité d'actionnement rotative (12) est décalée d'une quantité prédéterminée dans la direction qui va de l'autre côté au premier côté sur l'axe de coordonnées lors du retour de l'élément élastique (15) depuis son état déformé de façon élastique, le moyen de commande (28) détermine que la force d'actionnement pour décaler la coordonnée vers l'autre côté depuis la position de référence n'est pas appliquée à l'unité d'actionnement rotative (12).

# FIG. 1

CONTROL UNIT

# FIG. 2

# FIG. 3

# FIG. 4A

32

CH1  CH2  CH3  CH4  CH5

B

SC1  SC2  SC3  SC4  SC5

P

12

# FIG. 4B

32

CH1  CH2  CH3  CH4  CH5

B

SC1  SC2  SC3  SC4  SC5

P  P

12

# FIG. 5

```
        ┌─────────────────────┐
        │   CONTROL PROCESS   │
        └─────────────────────┘
                   │
                   ▼
        ┌─────────────────────┐
        │   INITIAL SETTING   │ ⟋S10
        │     PROCESSING      │
        └─────────────────────┘
                   │
    ┌──────────────┤
    │              ▼
    │   ┌─────────────────────┐
    │   │   ANGLE DETECTION   │ ⟋S20
    │   │     PROCESSING      │
    │   └─────────────────────┘
    │              │
    │              ▼
    │   ┌─────────────────────┐
    │   │  FRICTIONAL FORCE   │ ⟋S30
    │   │ CALCULATION PROCESSING │
    │   └─────────────────────┘
    │              │
    │              ▼
    │   ┌─────────────────────┐
    │   │ ELECTROMAGNETIC BRAKE │ ⟋S40
    │   │  DRIVING PROCESSING │
    │   └─────────────────────┘
    │              │
    │              ▼
    │   ┌─────────────────────┐
    │   │   SIGNAL OUTPUT     │ ⟋S50
    │   │     PROCESSING      │
    │   └─────────────────────┘
    │              │
    └──────────────┘
```

FIG. 6A

FIG. 6B

# FIG. 7

FRICTIONAL FORCE
CALCULATION PROCESS

S300
ARE COORDINATES OF $\theta$ LOCATED IN ASCENDING INTERVAL TO RIGHT OF REFERENCE POSITION?

NO

YES

S308
ARE COORDINATES OF $\theta$ LOCATED IN ASCENDING INTERVAL TO LEFT OF REFERENCE POSITION?

NO

YES

S302
$\theta < (\theta\text{old} - \Delta\theta)$?

NO

YES

S310
$\theta > (\theta\text{old} + \Delta\theta)$?

NO

YES

S304
SHIFT COORDINATES OF $\theta$ TO CLOSEST (LEFT) REFERENCE POSITION

S312
SHIFT COORDINATES OF $\theta$ TO CLOSEST (RIGHT) REFERENCE POSITION

S306
$F = f(\theta)$

RETURN

FIG. 8A

FIG. 8B

**EP 2 192 469 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003295959 A
- US 20060054427 A1
- US 20060071917 A1
- DE 102006018522 A1